# EUROPÄISCHE PATENTANMELDUNG

(11) **EP 3 444 055 A1**
(43) Veröffentlichungstag der Anmeldung: **20.02.2019**
(21) Anmeldenummer: 18000675.1
(22) Anmeldetag: 15.08.2018
(51) Int. Cl.: B23B 31/107, B23B 51/04

(54) **SPANNFUTTER ZUM EINSPANNEN EINE ROTIERENDEN WERKZEUGS**

(30) Priorität: 30.07.2018 DE 102018005938; 18.08.2017 DE 102017009172
(71) Anmelder: Zirden, Udo, 42857 Remscheid (DE)
(72) Erfinder: Zirden, Udo, 42857 Remscheid (DE)
(74) Vertreter: Pfingsten, Dieter

(57) **Zusammenfassung**

▪ Ein Spannfutter zum Einspannen eines rotierenden Werkzeugs in eine handgeführte Werkzeugmaschine weist ein koaxiales zylindrisches Mitnehmerloch und eine radial zur Rotationsachse geführte handbetätigbare Klemmeinrichtung auf. Das der Mitnehmerloch vorzugsweise kongruent geformte Einspannende der Werkzeugwelle ist in dem Mitnehmerloch drehfest festklemmbar. Das zylindrische Mitnehmerloch umschließt das Einspann-Ende (2.6) mit geringem Spiel. Die Klemmeinrichtung ist eine in dem Spannfutter schwenkbar gelagerte Exzenterwelle mit Exzenter, welcher in seiner Klemmstellung eine durch Anfasung entstandene Seitenfläche der Werkzeugwelle beaufschlagt und die Werkzeugwelle längs zumindest einer Mantellinie zur Anlage an das Mitnehmerloch bringt. Dazu ist die Bohrung zur Aufnahme der Exzenterwelle so ausgerichtet, dass sie in einer der Seitenflächen (4.1) des Mitnehmerlochs mit einem Abschnitt ihres Kreisquerschnitts ein Einschwenkfenster ausschneidet. Zumindest eine der Seitenflächen (4.1) des in das Mitnehmerloch eingesteckten polygonalen Mitnehmerzapfens (2.6) besitzt gegenüber dem Einschwenkfenster eine gleich gelegene und gleich ausgerichtete Aussparung, im Querschnitt vorzugsweise in Form einer Kreiskappe. In diesem Bereich ist die Exzenterwelle bis nahe auf ihre Mittelebne abgeflacht, derart dass die Exzenterwelle in ihrer Neutralstellung mit ihrer Abflachung außerhalb und in ihrer Klemmstellung innerhalb des Mitnehmerlochs liegt und die Axialbewegung des Mitnehmerzapfens (2.6) formschlüssig sperrt. Das Werkzeug ist dauerhaft mit einem Adapter verbunden. Der Adapter liegt mit einer zylindrischen Zwischenplatte auf der Stirnseite des Spannfutters an und ist gegenüber dieser durch einen in eine Ringnut eingelegten und diese überragenden hoch-elastischen Dichtring abgedichtet.

## Beschreibung

Die Erfindung betrifft ein Spannfutter nach dem Oberbegriff des Anspruchs 1.

Hierzu kann z.B. auf die DE10107432A1 verwiesen werden, welche das Einspannen einer Lochsäge in eine handgeführte Werkzeugmaschine betrifft.

Durch DE 8907348U1 ist eine Vorrichtung zur lösbaren Kopplung von Greifern oder Werkzeugen an Roboterarmen mit korrespondierenden Flanschelementen bekannt, die in der Verriegelungslage zentrisch von einer Bohrung und einem Verriegelungsbolzen durchsetzt sind. Dabei kann die Bohrung geringfügig exzentrisch zum Verriegelungsbolzenangebracht sein kann, so dass die Auflagen der Flanschelemente axial auf einander gepreßt werden.

Die DE4427933C2 beschreibt ein Schnellwechselfutter, in dessen zentrische Halteausnehmung der Schaft-förmige Befestigungsabschnitt eines Werkzeughalters einsetzbar ist. Die Drehmomentübertragung geschieht dadurch, dass beide, die Halteausnehmung und der Schaft-förmige Befestigungsabschnitt geringfügig exzentrisch liegen oder insgesamt komplementär polygonformig konturiert sind. Zur axialen Festlegung des Befestigungsabschnitt 12 in der Halteausnehmung dienen gerade Verriegelungselemente in jeweils einem Schlitz, welcher in einer zur Radialebene geneigten Ebene von außen in das Futter eingebracht ist und dabei die Halteausnehmung und den Schaft-förmige Befestigungsabschnitt des Werkzeughalters anschneidet. Die axiale und radiale Festlegung ist hier auf den Bereich einer Radialebene beschränkt, so dass vor allem bei wechselndem Drehmoment des Werkzeugs ein Rattern unvermeidbar ist.

Es kann vorkommen, dass Werkzeuge häufig gewechselt werden müssen, um unterschiedliche Größen von Werkzeugen zu benutzen, oder um verschlissene Werkzeuge zu ersetzen.

Es muß daher Aufgabe sein, Spannfutter und Einspann-Ende der Werkzeugwelle unter folgenden Aspekten auszugestalten:
- der Werkzeugwechsel soll schnell, mit Einhandbedienung, mit minimal wenigen Handgriffen, ohne Zuhilfenahme eines Werkzeugs zum Entspannen und zum Spannen des Spannfutters beim Aus- und Einspannen eines Werkzeugs erfolgen können;
- es soll trotz Schnelligkeit, Einfachheit und Leichtigkeit des Werkzeugwechsels ein koaxial zentrierter ratterfreier Sitz des Werkzeugs in dem Spannfutter erzielt werden;
- der Sitz des Werkzeugs in dem Spannfutter soll über lange Arbeitszeit fest, ratterfreier und dauerhaft sein;
- es soll auch nach langem Gebrauch, insbesondere auch nach Staub- und Schmutz-belastetem Gebrauch das Lösen des Werkzeugs aus dem Spannfutter ohne Kraftanstrengung und ohne Hilfsmittel gewährleistet sein.

Diese Aufgabe und ihre Teil-Aspekte werden gelöst durch:
- ein Spannfutter nach der DE4427933C2 und dem Oberbegriff des Anspruchs 1 das zum Einspannen eines rotierenden Werkzeugs in eine handgeführte Werkzeugmaschine ein koaxiales zylindrisches Mitnehmerloch und eine radial zur Rotationsachse beweglich geführte handbetätigbare Klemmeinrichtung aufweist, mit welcher das Einspannende der Werkzeugwelle in dem Mitnehmerloch festklemmbar ist,
wobei
die Klemmeinrichtung eine Exzenterwelle (5.3) ist, welche
- in einer Bohrung des Spannfutters um ihre Längsachse (Schwenkachse) zwischen einer Neutralstellung und einer Klemmstellung schwenkbar gelagert ist,
- das Mitnehmerloch etwa im mittleren Drittel seiner axialen Länge in der Schnittlinie einer Radialebene und einer Axialebene durchdringt und dabei die Rotationsachse mit Abstand senkrecht kreuzt
- und innerhalb des Mitnehmerlochs einen zu der Schwenkachse exzentrischen Umfangsbereich (Exzenter) bildet, welcher in der Neutralstellung der Exzenterwelle (5.3) von der Rotationsachse abgewandt ist und durch Drehen der Exzenterwelle in ihre Klemmstellung der Rotationsachse zugewandt ist,
wobei weiters der zylindrische Mitnehmerzapfen (2.6) in einer Axialebene durch eine Seitenfläche (2.7) derart abgeflacht ist, dass er in der Neutralstellung der Exzenterwelle (5.3) in die Ausnehmung steckbar ist, wobei die Seitenfläche (2.7) mit Spiel der Exzenterwelle (5.3) zugewandt und die Grundfläche des zylindrischen Mitnehmerzapfen (2.6) von der Grundfläche des Mitnehmerlochs mit geringem Spiel umschrieben ist,
derart, dass durch Drehen der Exzenterwelle (5.3) in deren Klemmstellung der Exzenter eine Kraft auf die Seitenfläche (2.7) derart ausübt, dass der zylindrische Mitnehmerzapfen (2.6) zwischen der Exzenterwelle (5.3) und einer oder höchstens zwei Mantellinien des Mitnehmerlochs (Mantellinie 2.9), welche der Exzenterwelle gegenüberliegen, eingeklemmt wird.

Eine konkrete Ausgestaltung ist dadurch gekennzeichnet, dass das zylindrische Mitnehmerloch zur zentrischen Aufnahme des Einspannendes der Werkzeugwelle eine einseitig angefaste Grundfläche besitzt,
▪ daß das Einspann-Ende ein zylindrischer Mitnehmerzapfen (2.6) ist mit einer zu der Grundfläche der Mitnehmerlochs kongruenten Grundfläche und im wesentlichen kongruenter Seitenfläche (4.1),
▪ dass die Klemmeinrichtung ein an dem Spannfutter schwenkbar gelagerter Exzenter (Exzenterwelle 5.3) ist, der in seiner Neutralstellungaußerhalb der Grundfläche liegt und in seiner Klemmstellung die Seitenfläche durchdringt und dort mit der Seitenfläche (2.7) zusammenwirkt, um eine zur Rotationsachse senkrechten Kraft auf die Mantellinie (2.9) des Mitnehmerzapfens auszuüben, welche der Exzenterwelle gegenüberliegt.

Bei diesen Ausgestaltungen besorgt die Klemmeinrichtung, dass der zylindrische Mitnehmerzapfen des Werkzeugs sich über seine ganze axiale Länge an eine oder zwei Mantellinien des Mitnehmerlochs anschmiegt und dadurch axial ratterfrei eingespannt ist.

(Dabei erfolgt auch die drehfeste Einspannung zur Übertragung des Drehmoments auf das Werkzeugs, und zwar formschlüssig durch Anlage des Exzenters an der Seitenfläche (2.7).

Die axiale Einspannung ist insoweit nur kraftschlüssig, was im allgemeinen genügt. Wenn jedoch die Gefahr besteht, dass das Werkzeug sich beim Gebrauch festklemmt und ein axialer Zug auf das Werkzeug ausgeübt werden muß, wird die Ausführung nach Anspruch 5 gewählt, die insoweit eine bevorzugte Ausführung zu Anspruch 1 darstellt.

Ausführungsbeispiele für die Ausgestaltung des Einspann-Endes (Mitnehmerzapfen (2.6)) der Werkzeugwelle sind in Ansprüchen 2 und 3 enthalten.

Der Mitnehmerzapfen nach Anspruch 2 hat den Vorteil, dass er als Kreiszylinder einfach zu fertigen und mit der angefasten Seitenfläche zu versehen ist. Je nach Ausgestaltung der Grundfläche des zylindrischen Mitnehmerlochs schmiegt sich der kreiszylindrische Mantelbereich zumindest über die axialer Länge einer Mantellinie an den Innenmantel des Mitnehmerlochs an, so dass das Werkzeug nicht um seine Längsachse kippen und dadurch rattern kann, insbesondere, wenn das Mitnehmerloch entsprechend Anspruch 4 im wesentlichen kongruent mit Spiel zum Mitnehmerzapfen (2.6), also auch kreiszylindrisch ausgebildet ist.

In der Ausgestaltung nach Anspruch 1 kann das Mitnehmerloch kreizylindrisch ausgeführt, also als Bohrung oder durch Ausdrehen gefertigt sein. Die Exzenterwelle ist dann sekantial zu dem Mitnehmerloch ausgerichtet und liegt im Bereich des Mitnehmerlochs frei, jedoch mit Abstand zur Rotationsachse des Werkzeugs. Die Grundfläche des Mitnehmerzapfens (2.6) ist dann auf denjenigen Bereich der Grundfläche des Mitnehmerlochs beschränkt, welcher zwischen der Projektion der Sekante auf die Grundfläche und dem die Rotationsachse umgebenden Umfangsbereich des Mitnehmerlochs liegt. Die angefaste Seitenfläche des Mitnehmerzapfens (2.6) wird folglich dieser Sekante gegenüber liegen und bestimmt damit die Drehlage, in der der Mitnehmerzapfen (2.6) in das Mitnehmerloch gesteckt werden muß.

Der restliche zylindrische Bereich des Mitnehmerlochs bleibt dann während des Betriebes ungenutzt. Um zu vermeiden, dass sich hier Schmutz, insbesondere Späne sammeln, wird nach Anspruch 6 das Mitnehmerloch des Spannfutters so konturiert, dass der Seitenfläche (2.7) des zylindrischen Mitnehmerzapfens eine im wesentlichen kongruente Seitenfläche des Mitnehmerlochs gegenüberliegt, wobei die Bohrung der Exzenterwelle parallel zu dieser verläuft und dabei in dieser mit einem Abschnitt ihres Kreisquerschnitts ein Einschwenkfenster ausschneidet, derart, dass die Exzenterwelle das Einschwenkfenster in ihrer Neutralstellung nicht, in ihrer Klemmstellung mit ihrem Exzenter durchstößt.

Damit wird die Exzenterwelle durch die Wandungen der Bohrung über ihre ganze Länge abgestützt und geführt.

Dieser Vorteil ergibt sich auch in der Kombination der Ansprüche 3 und 4; dabei weist das Spannfutter ein zylindrisches Mitnehmerloch mit gleichseitig polygonaler Grundfläche und mit gleichen Seiten und Seitenflächen (4.1) bei ungerader Seitenzahl -vorzugsweise drei Seiten- auf, während das Einspann-Ende ein zylindrischer Mitnehmerzapfen (2.6) ist mit einer zu der Grundfläche des Mitnehmerlochs kongruenten polygonalen Grundfläche und im wesentlichen kongruenten Seitenflächen (4.1), wobei der Exzenter der Exzenterwelle 5.3 in seiner Neutralstellung außerhalb der polygonalen Grundfläche- liegt und in seiner Klemmstellung eine der Seitenflächen der polygonalen Aussparung- durchdringt und dort mit einer der Seitenflächen (2.7) des Mitnehmerzapfens (2.6) zusammenwirkt, um mit der Axialkante des Mitnehmerzapfens, welche der Exzenterwelle gegenüberliegt, eine zur Rotationsachse senkrechten Kraft auf die Mantellinie (2.9) des Mitnehmertochs (4) auszuüben.

In einer Weiterbildung zu einem Adapter (2.3), welcher mit dem Werkzeug dauerhaft verbunden ist und welcher zur Aufnahme der der Spannkraft zwischen Adapter der Stirnseite des Spannfutters mit einer Zwischenplatte gegenüberliegt - so in der DE4427933C2 bereits beschrieben- wird nach Anspruch 7 ein Spannfutter vorgeschlagen, das zum Einspannen eines rotierenden Werkzeugs in eine handgeführte Werkzeugmaschine eine koaxiale zylindrische Aussparung -in dieser Anmeldung als Mitnehmerloch bezeichnet- und eine radial zur Rotationsachse geführte handbetätigbare Klemmeinrichtung aufweist, mit welcher das Einspannende des Adapters in dem Mitnehmerloch drehfest und axial formschlüssig festklemmbar ist.

Zur Abdichtung gegen Staub, Schmutz und Späne, vor allem aber zur ratterfreien Zentrierung und Einspannung des Adapters wird zwischen der zylindrischen Zwischenplatte und der Stirnseite des Spannfutters eine hoch-elastischen ptattenförmige oder ringförmige, vorzugsweise gummielastische Zwischenschicht, vorzugsweise ein zentriert festgelegter hoch-elastischen Dichtring vorgesehen, Zur Zentrierung ist der Dichtring vorzugsweise in eine Ringnut eingelegt ist, wobei er diese überragt. Dadurch ist zum einen der Spalt zwischen der zylindrischen Zwischenplatte und der Stirnseite des Spannfutters abgedichtet. Vor allem aber wird bewirkt, dass beim Einspannen des Adapters in das Mitnehmerloch durch Einrasten der formschlüssigen axiale Festklemmung des Adapters -insbesondere nach Anspruch 5- gegen die Elastizität der Zwischenplatte eine dauernde Axialkraft zwischen der zylindrischen Zwischenplatte und der Stirnseite des Spannfutters entsteht, die zur radialen und axialen Verspannung, Festlegung und Zentrierung des Adapters führt.

Ein besonderer Aspekt der Erfindung besteht darin, dass ein Spannfutter zum Einspannen eines rotierenden Werkzeugs in eine handgeführte Werkzeugmaschine eine koaxiale zylindrische Aussparung, d.h. Mitnehmerloch und eine radial zur Rotationsachse geführte handbetätigbare Klemmeinrichtung aufweist; mit dieser ist das der Aussparung/Mitnehmerloch vorzugsweise kongruent geformte Einspannende der Werkzeugwelle in der Aussparung/ Mitnehmerloch drehfest festklemmbar; die Klemmeinrichtung ist eine Exzenterwelle, die in einer Bohrung schwenkbar gelagert ist und dem Kreisquerschnitt der Bohrung mit Spiel entspricht, wobei die Bohrung quer die Rotationsachse (1.3) des Werkzeugs (2) kreuzend ausgerichtet ist und in der Seitenfläche (4.1) des Mitnehmerlochs mit einem Abschnitt ihres Kreisquerschnitts ein Einschwenkfenster ausschneidet, und die Seitenfläche (2.7) des in das Mitnehmerloch eingesteckten Mitnehmerzapfens (2.6) gegenüber dem Einschwenkfenster eine gleich gelegene und gleich ausgerichtete Aussparung/ Mitnehmernut 2.8 besitzt, im Querschnitt vorzugsweise in Form einer Kreiskappe, derart, dass die Exzenterwelle in ihrer Neutralstellung mit ihrer Abflachung außerhalb und in ihrer Klemmstellung innerhalb der Aussparung/ Mitnehmernut liegt und die Axialbewegung des Mitnehmerzapfens (2.6) formschlüssig sperrt.

In einem Ausführungsbeispiel ist die Bohrung die Rotationsachse (1.3) des Werkzeugs (2) quer kreuzend ausgerichtet; in einer der Seitenflächen (4.1) des Mitnehmerlochs schneidet sie mit einem Abschnitt ihres Kreisquerschnitts ein Einschwenkfenster aus, und zumindest eine der Seitenflächen (2.7) des in das Mitnehmerloch eingesteckten polygonalen Mitnehmerzapfens (2.6) besitzt gegenüber dem Einschwenkfenster eine gleich gelegene und gleich ausgerichtete Mitnehmemut (2.8), im Querschnitt vorzugsweise in Form einer Kreiskappe, derart, dass die Exzenterwelle in ihrer Neutralstellung mit ihrer Abflachung außerhalb und in ihrer Klemmstellung innerhalb der Mitnehmerloch liegt und die Axialbewegung des Mitnehmerzapfens (2.6) formschlüssig sperrt.

Jeder der Ansprüche 1, 5 und 7 mit seinen jeweiligen Unteransprüchen und mit den jeweiligen Teilaspekten der Aufgabe beinhaltet also eine selbständige, von den übrigen Ansprüchen unabhängige Erfindung, wird aber zur Lösung der Gesamtaufgabe vorteilhaft in Kombination mit zumindest einem der anderen Ansprüche und Unteransprüche angewandt.

Im Folgenden werden Ausführungsbeispiele für jeden der Ansprüche anhand der Zeichnung beschrieben. Die Bezugszeichen sind einheitlich für funktionsgleiche Teile gewählt. Die Beschreibung gilt für alle Teile der Zeichnung, sofern nicht für eine einzelne Figur auf Besonderheiten ausdrücklich verwiesen wird.

Es zeigen:
Fig. 1 die Ansicht
Fig. 2 den Schnitt durch das Ausführungsbeispiel
Fig. 3 die Ansicht eines Adapters, aus dem Spannfutter herausgenommen;
Fig. 4: das Spannfutter im Schnitt der Radialebene IV-IV (Fig.2)
Fig. 5 den Schnitt durch einen Dichtring
Fig. 6 die Ansicht eines Adapters, anderes Ausführungsbeispiel aus dem Spannfutter herausgenommen;
Fig. 7 das Spannfutter im Schnitt der Radialebene IV-IV (Fig.2)
Fig. 8 den Schnitt durch ein anderes Ausführungsbeispiel
Fig. 9: das Spannfutter im Schnitt der Radialebene IX-IX der Fig.8

In der nicht gezeigten handgeführten Werkzeugmaschine kann das kreiszylindrische Spannfutter 1 mit seiner Abtriebswelle 3 eingespannt werden. Anders als die übliche Spanneinrichtung der Werkzeugmaschine ist das Spannfutter 1 so ausgeführt, dass die Aufgabenstellung der Erfindung in allen Teilaspekten erfüllt wird.

In den Ausführungsbeispielen ist als Werkzeug 2 eine Lochsäge mit dem kreiszylindrischen Sägekranz 2.1 gezeigt. Hierfür ist die Erfindung besonders geeignet und angepasst. Die Werkzeugmaschine mit der Antriebswelle ist nicht gezeigt, sondern nur die Abtriebswelle 3, welche durch eine übliche Einspanneinrichtung verbunden und um Rotationsachse 1.3 drehend antreibbar ist. Der untere Rand des Sägekranzes 2.1 ist an den Umfang einer kreiszylindrischen Basisplatte 2.2 angeschweißt. Die Basisplatte 2.1 besitzt zentrisch ein Gewindeloch, mit welchem der Sägekranz und die Basisplatte auf den Gewindezapfen 2.4 eines Adapters 2.3 geschraubt ist.

Der Adapter ist ein selbständiges Bauteil, das in größerer Stückzahl vorhanden sein sollte. Jedes zum Gebrauch vorgesehene bzw. im Gebrauch befindliche Werkzeug sollte mit einem derartigen Adapter dauerhaft verbunden/angeschraubt sein. Der Adapter erlaubt dann durch seine besondere Ausgestaltung, die unten beschrieben wird, einen einfachen und schnellen Werkzeugwechsel und einen festen Sitz des Werkzeugs im Spannfutter mit allen Vorteilen im Sinne der Erfindung.

Im Einzelnen:
Der Adapter 2.3 weist die kreiszylindrische Zwischenplatte 2.5 auf. Mit dieser zentrisch verbunden ist auf der einen Seite der besagte Gewindezapfen 2.4 und auf der anderen Seite ein Mitnehmerzapfen 2.6, der hier als Einspann-Ende der Werkzeugwelle dient und in dieser Anmeldung so bezeichnet wird.

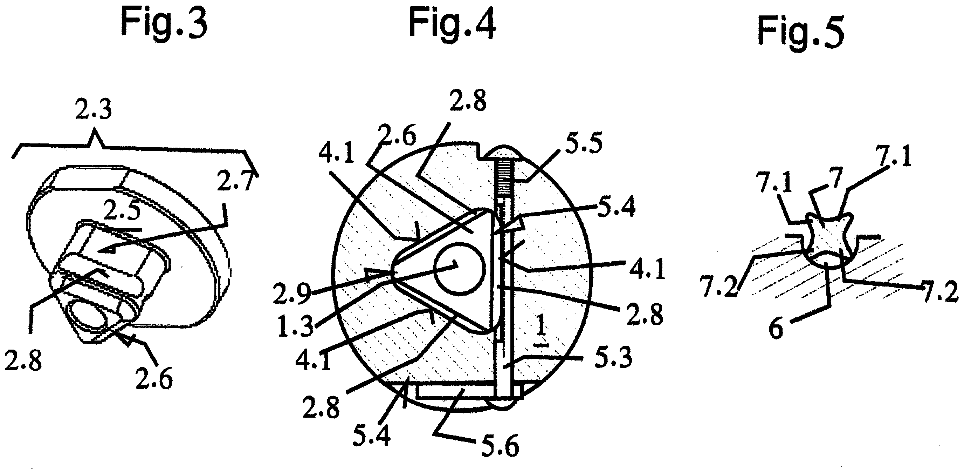

Der Mitnehmerzapfen 2.6 ist ein zylindrischer zentrischer Ansatz der Zwischenplatte, über dessen Grundfläche mit Bezug auf die Fig.3-4 und 6-7 und 8-9 getrennt berichtet wird.

Fig.3-4 zeigen eine polygonale Grundfläche, hier ein gleichseitiges Dreieck. Auch ein Rechteck oder ein gleichseitiges Fünfeck ist denkbar. Wenn die Grundfläche eine ungerade Zahl von Ecken hat, wird damit -wie später nochmals erklärt- der ratterfreie Sitz der Werkzeugwelle in dem Spannfutter ohne Rücksicht auf besondere Fertigungstoleranzen gewährleistet.

Die Stirnfläche 1.2 des kreiszylindrischen massiven Körpers des Spannfutters 1 weist zentrisch ein Mitnehmerloch 4 auf, im Verlauf dieser Anmeldung auch als Aussparung bezeichnet. Dieses hat dieselbe, im wesentlichen kongruente polygonale Grundfläche wie und ist nur wenig tiefer als der Mitnehmerzapfen 2.6 lang ist. Der Adapter 2.3 kann also mit dem Mitnehmerzapfen 2.6 in das Mitnehmerloch 4 bei nur geringem Spiel gesetzt werden.

Zum Verspannen des Mitnehmerzapfens 2.6 in dem Mitnehmerloch 4 dient eine Klemmeinrichtung 5, welche die Wirkung eines Exzenters hat, welcher eine Kraft senkrecht auf eine der Seitenflächen des Mitnehmerzapfens ausübt.

Die Klemmeinrichtung 5 hat dazu eine Exzenterwelle 5.3. Sie ist mit geringem Spiel dreh- oder schwenkbar gelagert in der Bohrung 5.2. Diese durchdringt den Körper des Spannfutters sekantial von einer Seite des Zylindermantels zur anderen, jedoch außermittig. Dabei ist sie in einer Radialebene und parallel zu einer der Seitenflächen 4.1 des polygonalen Mitnehmerlochs derart angelegt und ausgerichtet, dass sie ein rechteckiges Fenster, hier genannt: Einschwenkfenster, ausschneidet. Die kreiszylindrische Exzenterwelle 5.3 ist im Bereich dieses Einschwenkfensters abgeflacht Die Abflachung 5.4 erstreckt sich über die gesamte Länge der Seitenfläche 4.1 des polygonalen Mitnehmerlochs. Die Abflachung 5.4 ist im Querschnitt eine Kreiskappe, die von dem Kreisquerschnitt der Exzenterwelle einen wesentlichen Teil, vorzugsweise etwas weniger als die Hälfte wegschneidet. Der stehen gebliebene Rest der Exzenterwelle hat also im Bereich des Einschwenkfensters den Querschnitt einer Kreiskappe, deren Höhe gleich oder etwas größer als der Radius des Kreisquerschnittes der Exzenterwelle ist.

Die Dimensionen der Abflachung 5.4, der Lage der Bohrung 5.2 und damit der Größe des Einschwenkfensters sind so abgestimmt, dass die Exzenterwelle 5.3 in ihrer Neutralstellung nicht aus dem Einschwenkfenster ragt, beim Verschwenken in die Klemmstellung jedoch mit dem stehen gebliebenen Rest ihres Querschnitts (Exzenter5.3) aus dem Einschwenkfenster in den innenraum des Mitnehmerlochs ragt.

Der Mitnehmerzapfen 2.6 besitzt nun zumindest an einer seiner Seitenflächen 2.7 eine Mitnehmernut 2.8, die gegenüber der Ebene der Seitenfläche eine Kreiskappen-förmigen Querschnitt hat, der im wesentlichen dem fehlenden Querschnitt der Abflachung 5.4 der Exzenterwelle 5.3 entspricht. Eine entsprechende Mitnehmernut 2.8 ist vorzugsweise in jeder der Seitenflächen des Mitnehmerzapfens vorgesehen. Es ist daher egal, in welcher Drehstellung der Mitnehmerzapfen in das Mitnehmerloch gesteckt wird: Es liegt jedenfalls eine Mitnehmernut 2.8 vor dem Einschwenkfenster, welches in der Seitenfläche des Mitnehmerlochs durch die Bohrung 5.2 gebildet wird.

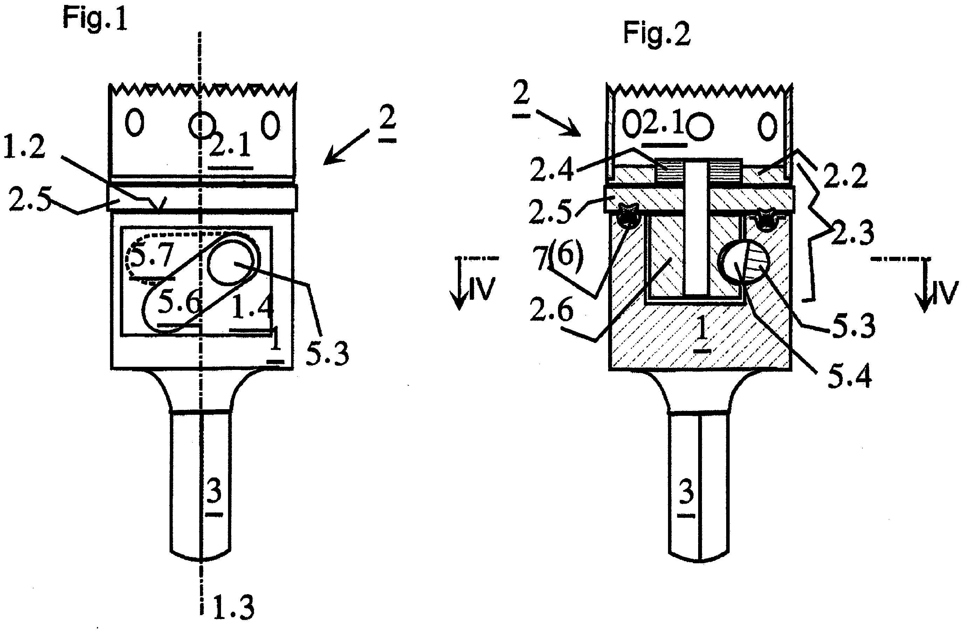

Die axiale Lage der Exzenterwelle ist einerseits durch die Sicherungsschraube 5.5 festgelegt. Am anderen Ende der Exzenterwelle 5.3 ist ein Schwenkhebel befestigt und bei 5.6 in der Neutralstellung, bei 5.7 in der Klemmstellung gezeigt. Der Schwenkhebel liegt in einer Aussparung 5.1 innerhalb des Hüllzylinders des Spannfutter-Mantels. Wie Fig.2 zeigt, liegt der stehen gebliebene Teil-Querschnitt 5.3 der Exzenterwelle in der Neutralstellung 5.6 des Schwenkhebels außerhalb des Mitnehmerlochs 4 und seiner Seitenfläche 4.1 bzw. des darin eingebrachten Einschwenkfensters und der Mitnehmernut 2.8 der gegenüber liegenden Seitenfläche 2.7 des Mitnehmerzapfens 2.6.

In der Klemmstellung 5.7 des Schwenkhebels, welche die durch eine nicht gezeigte Feder die Normalstellung ist, tritt der stehen gebliebene Teil-Querschnitt =Exzenter 5.4 der Exzenterwelle durch das Einschwenkfenster der Seitenfläche 4.1 des Mitnehmerlochs und liegt sodann in der Mitnehmernut 2.8 des Mitnehmerzapfens 2.6 und in der Bohrung 5.2 des Spannfutters 1. Dadurch entsteht eine formschlüssige Verbindung zwischen Spannfutter und Mitnehmerzapfen. Durch diesen Formschluß wird bei entsprechender enger Dimensionierung der Lage der Bohrung, des Durchmessers der Exzenterwelle bzw ihres Hüllzylinders und der Mitnehmernut 2.8 des Mitnehmerzapfens eine Kraft senkrecht auf die betroffene Seitenfläche und damit auch auf die Axialkante 2.9 des Mitnehmerzapfens, welche der Exzenterwelle gegenüberliegt, ausgeübt.

Damit wird der Mitnehmerzapfen und das gesamte Werkzeug nicht nur in Achsrichtung sondern auch in radialer und in Umfangs-Richtung fest eingespannt und das Rattern bei der Rotation des Werkzeugs vermieden.

Mit dem Daumen der Hand, die die Werkzeugmaschine mit dem eingespannten Werkzeug hält, kann der Schwenkhebel gegen die (nicht gezeigte) Feder wieder in die Neutralstellung 5.6 gelegt und mit der anderen Hand der Mitnehmerzapfen 2.6 aus dem Mitnehmerloch 4 gezogen und das Werkzeug aus dem Spannfutter 1 genommen werden.

Werkzeuge wie z.B. Bohrer, Steinbohrer, Lochsägen erzeugen viel Staub, wenn sie auf dem Bau in Stein, Mörtel, Holz, Kunststoff u.ä. angewandt werden. Es sind Maßnahmen getroffenen, dass diese Staub- und Schmutzbelastung nicht den Spannmechanismus des Spannfutters trifft und blockiert.

Der Adapter 2.3 besitzt dazu die zylindrische Zwischenplatte 2.5, die im eingespannten Zustand des Werkzeugs mit einer Stirnfläche auf der Stirnfläche 1.2 des Spannfutters aufliegt und im wesentlichen denselben Durchmesser haben mag. Wie gesagt der Mitnehmerzapfen ist nicht so lang, dass er dabei auf den Boden des Mitnehmerlochs 4 stößt.

Die Stirnflächen der Zwischenplatte und des Spannfutters bilden daher im eingespannten Zustand des Werkzeugs eine Paarung mit einem geringen Spalt.

In diesen Spalt wird ein hoch-elastische Zwischenschicht 7 eingelegt, die einerseits eine Dichtwirkung, andererseits eine Spannwirkung hat, wenn in der Klemmstellung 5.7 des Schwenkhebels der stehen gebliebene Teil-Querschnitt 5.3 der Exzenterwelle-d.h. der Exzenter- mit der Mitnehmernut 2.8 des Mitnehmerzapfens 2.6 eine formschlüssige Verbindung zwischen Spannfutter und Mitnehmerzapfen entstehen läßt. Diese formschlüssige Verbindung bewirkt auch eine axiale Verspannung von Mitnehmerzapfen und Mitnehmerloch, wenn die Lage der Exzenterwelle an dem Spannfutter (Bohrung 5.2) und die Mitnehmernut 2.8 relativ zueinander entsprechend mit geringer Überschneidung dimensioniert sind. Wenn also der Mitnehmerzapfen in das Mitnehmerloch gesteckt ist, wird zunächst der Schwenkhebel gegen die (nicht gezeigte) Feder in die Neutralstellung gelegt, so daß der Mitnehmerzapfen bis an den Anschlag der Zwischenschicht in das Mitnehmerloch gesteckt werden kann. Sodann werden beide durch eine Axialkraft - z.B. einen Schlag mit der Hand auf das Werkzeug bzw. den Adapter- gegen die Elastizität der Zwischenschicht zusammengepreßt, sodaß der Exzenter die Mitnehmernut in axialer Richtung erreicht und sich unter der Kraft der (nicht gezeigten) Feder da hinein bewegen und legen kann, wobei der Schwenkhebel in seine Klemmstellung 5.7 einschwenkt. Diese axiale, jedoch elastische Verspannung hat mehrere Vorteile, darunter auch eine-in Grenzen- kardanische Verbindung zwischen Werkzeug und Werkzeugmaschine. Vor allem aber ist hierdurch eine ratterfreie Verbindung auch dann gewährleistet, wenn bei längerem Gebrauch und Verschleiß die ursprünglichen engen Toleranzen nicht mehr gegeben sind.

In Fig.2 ist als eine elastische Zwischenschicht 7 in eine Ringnut 6 der Stirnfläche 1.2 des Spannfutters 1ein Dichtring eingelegten. Die Ringnut ist im Ausführungsbeispiel koaxial zur Rotationsachse 1.3 in der Stirnfläche 1.2 des Spannfutters gelegen. Der elastische Dichtring, z.B. Gummi-Ring ist im Querschnitt multi-lobal, im Ausführungsbeispiel 4-lobal. Er ragt - im Querschnitt gesehen- mit einem oder zwei Dichtblättern 7,1 aus der Ringnut 6 heraus. Er stützt sich mit zwei Stützblätter 7.2 auf dem Grund der Ringnut 6 ab. Die Dichtblättern 7,1 und Stützblätter 7.2 bilden also - in der Ansicht des Dichtrings- hoch-flexible ringförmige Vorsprünge auf dem Umfang des Dichtrings 7. Derartig ausgebildete Dichtringe haben den Vorteil, breite und wechselnd breite Spalte überbrücken und wirksam abdichten zu können. Auch wenn die Stirnflächen nicht plan auf einander liegen oder bei der Rotation infolge von Fluchtungsfehlem der Wellen und des Werkzeugs oder seitlichen Belastungen relativ zu einander taumeln, wird das Rattern vermieden und der Spalt zwischen den Stirnflächen gegen Schmutz und Staub wirksam abgedichtet.

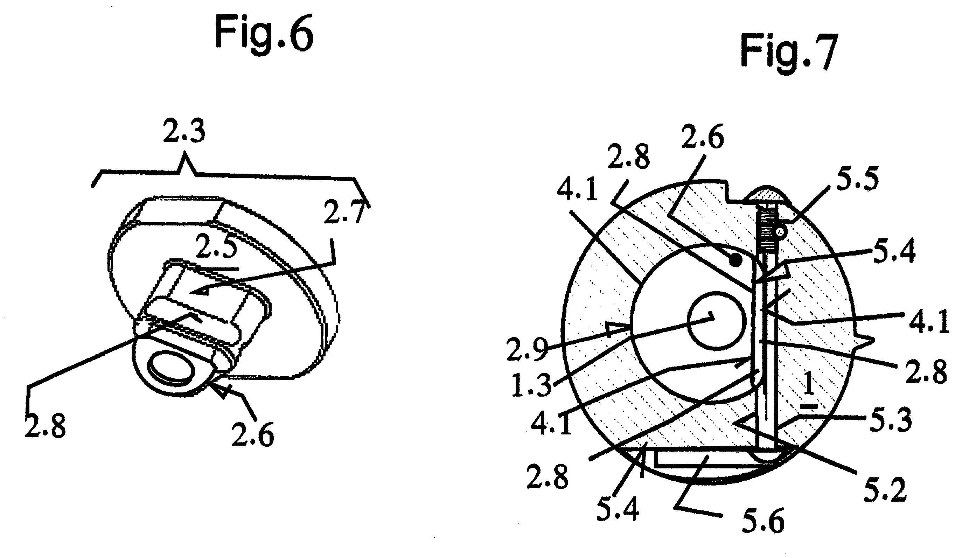

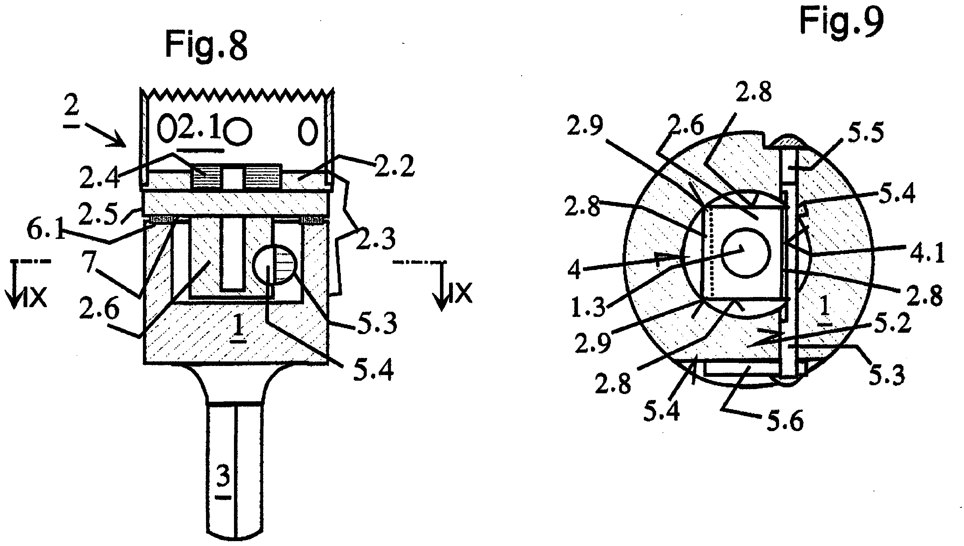

Fig. 6 zeigt die Ansicht eines anderen Ausführungsbeispiels des Adapters, aus dem Spannfutter herausgenommen, und Fig. 7 das entsprechende Spannfutter im Schnitt der Radialebene IV-IV
Es gilt die vorangegangene Beschreibung mit folgenden Abweichungen von den Ausführungsbeispielen nach Fig. 3,4 und Fig.8,9: Hinsichtlich des Ausführungsbeispiels nach Fig.8,9 weist dieses Ausführungsbeispiel den Vorteil auf, daß zur Drehmoment-Übertragung zwischen Spannfutter und Werkzeug die Flächenpaarung der relativ großen Flächen Seitenfläche 2.7 des Mitnehmerzapfens 2.6 und Seitenfläche 4.1 des Mitnehmerlochs 4 im Einsatz sind, während nach Fig.8/9 die Drehmomentübertragung an der Exzenterwelle erfolgt mit der Gefahr des Abscherens.

Hinsichtlich des Ausführungsbeispiels nach Fig.3,4 weist dieses Ausführungsbeispiel den Vorteil auf, daß der Mitnehmerzapfens als Kreiszylinder einfacher herstellbar ist als ein drei-eckiges Polygon.

Der Mitnehmerzapfen 2.6 ist hier ein kreiszylindrischer zentrischer Ansatz der Zwischenplatte nicht mit polygonaler sondern kreiszylindrischer Grundfläche, die in axialer Längsrichtung durch eine Seitenfläche 2.7 angefast ist. Die Längskanten der Seitenfläche werden durch Mantellinien des Zylinders gebildet.

Die Stirnfläche 1.2 des kreiszylindrischen massiven Körpers des Spannfutters 1 weist zentrisch ein Mitnehmerloch 4 auf. Dieses hat hier dieselbe, im wesentlichen kongruente Grundfläche wie und ist nur wenig tiefer als der Mitnehmerzapfen 2.6 der Zwischenplatte lang ist.

Der Adapter 2.3 kann also mit dem Mitnehmerzapfen 2.6 in das Mitnehmerloch 4 bei nur geringem Spiel gesetzt werden.

Zum Verspannen des Mitnehmerzapfens 2.6 in dem Mitnehmerloch 4 dient die Klemmeinrichtung 5, welche die Wirkung eines Exzenters hat, weicher eine Kraft senkrecht auf die Seitenfläche 2.7 des Mitnehmerzapfens ausübt.

Die Seitenfläche 2.7 des Mitnehmerzapfens 2.6 besitzt die Mitnehmernut 2.8, die zu der Ebene der Seitenfläche eine Kreiskappen-förmigen Querschnitt hat, der im wesentlichen dem fehlenden Querschnitt der Abflachung 5.4 der Exzenterwelle 5.3 entspricht.

Der Mitnehmerzapfen kann daher nur in einer Drehstellung in das Mitnehmerloch gesteckt werden, damit die Mitnehmernut 2.8 vor dem Einschwenkfenster liegt, welches in der Seitenfläche des Mitnehmerlochs durch die Bohrung 5.2 gebildet wird. In der Klemmstellung 5.7 des Schwenkhebels tritt der stehen gebliebene Teil-Querschnitt-Exzenter- der Exzenterwelle 5.3 durch das Einschwenkfenster der Seitenfläche 4.1 des Mitnehmerlochs 4 und liegt sodann in der Mitnehmemut 2.8 des Mitnehmerzapfens 2.6 und in der Bohrung 5.2 des Spannfutters 1. Dadurch entsteht eine formschlüssige Verbindung zwischen Spannfutter und Mitnehmerzapfen. Durch diesen Formschluß wird bei entsprechender enger Dimensionierung der Lage der Bohrung, des Durchmessers der Exzenterwelle bzw ihres Hüllzylinders und der Mitnehmernut 2.8 des Mitnehmerzapfens die Klemmkraft senkrecht auf die betroffene Seitenfläche und damit auch auf die Mantellinie 2.9 des Mitnehmerzapfens, welche der Exzenterwelle gegenüberliegt, aber auch die axiale Spannkraft -wie zuvor beschrieben- ausgeübt.

Fig. 8 zeigt den Schnitt durch ein modifiziertes Ausführungsbeispiel auf, das sich gegenüber dem Ausführungsbeispiel nach Fig 2 wie folgt auszeichnet:
Die Stirnflächen der Zwischenplatte 2.5 und des Spannfutters bilden auch hier im eingespannten Zustand des Werkzeugs eine Paarung zur Ausübund der axialen Spannkraft und mit Dichtwirkung. Dies wird durch die elastischen Zwischenschicht 7 bewirkt, die platten- oder scheibenförmig ausgebildet ist. Diese Zwischenschicht muß ein zentrales Loch für den Durchtritt des Mitnehmerzapfens 2.6 aufweisen und kann mit diesem Loch an dem Mitnehmerzapfen zentriert festgelegt sein. Ansonsten ist die Ausdehnung bzw. Radius der kreiszylindrischen Zwischenschicht nur durch die Durchmesser der Zwischenplatte 2.5 bzw. der Stirnfläche 1.2 nicht begrenzt.

In dem Ausführungsbeispiel ist gezeigt, dass die Zwischenschicht 7 nicht innen an dem Mitnehmerzapfen sondern außen durch einen Steg 6.1 zentriert ist, welcher die Stirnfläche 1.2 des Spannfutters 1 etwas überragt -anstelle der Ringnut in dem vorigen Ausführungsbeispiel. Der Steg liegt koaxial zur Rotationsachse 1.3 auf der Stirnfläche 1.2 des Spannfutters. Der elastische Zwischenschicht ragt axial über den Steg hinaus. Der Spalt zwischen der Zwischenplatte 2.5 und der Stirnfläche 1.2 wird durch die Zwischenschicht also überbrückt und verkleinert, wenn die Stirnflächen kraftvoll aufeinander gedrückt werden. Im eingespannten Zustand übt die Elastizität der Zwischenschicht eine Kraft auf die Stirnflächen aus, die bewirkt, dass die Stirnflächen der Zwischenplatte 2.5 und der Stirnfläche 1.2 plan zu einander liegen und bei Rotation infolge von Fluchtungsfehlern der Wellen und des Werkzeugs oder seitliche Belastungen nicht relativ zu einander taumeln und auch dann gegen Schmutz und Staub wirksam abgedichtet sind.

Anhand der Fig. 9 in Verbindung mit Fig.8 wird das Prinzip der Erfindung besonders deutlich.

Fig.9 zeigt ein Ausführungsbeispiel, das fertigungstechnisch günstig ist und Anwendung findet, wenn das Drehmoment zwischen Werkzeug und Spannfutter relativ gering und zur Übertragung des Drehmoments eine Flächenpaarung wie zwischen den Seitenflächen 2.7 des Mitnehmerzapfens und 4.1 des Mitnehmerlochs 4 -wie in den Figuren ¾, 6/6 nicht erforderlich ist.

Der Mitnehmerzapfens 2.6 besitzt eine rechteckige Grundfläche. Der ratterfreie Sitz der Werkzeugwelle in dem Spannfutter ist hier nur bei Rücksicht auf besondere Fertigungstoleranzen gewährleistet, da -im Gegensatz zu den vorbeschriebenen Ausführungsbeispielen, die insoweit auch bevorzugt sind, der Mitnehmerzapfen 2.6 mit zwei Mantellinien, d.h. hier Eck-Kanten- am Umfang des Mitnehmerlochs 4 anliegen. Eine Seitenfläche 4.1 ist mit der Mitnehmernut 2.8 versehen. Wenn die Grundfläche quadratisch gewählt wird, kann jede Seitenfläche eine Mitnehmernut 2.8 haben, so dass der Mitnehmerzapfen in beliebiger Drehlage in das Mitnehmerloch 4 eingesetzt werden kann.

Die Stirnfläche 1.2 des kreiszylindrischen massiven Körpers des Spannfutters 1 weist zentrisch das kreiszylindrische Mitnehmerloch 4 auf,. Dieses ist nur wenig tiefer als der Mitnehmerzapfen 2.6 an der Zwischenplatte lang ist.

Der Adapter 2.3 kann mit dem Mitnehmerzapfen 2.6 in das Mitnehmerloch 4 bei nur geringem Spiel gesetzt werden.

Dazu umschreibt die kreisrunde Grundfläche des Mitnehmerlochs 4 die rechteckige oder quadratische Grundfläche des Mitnehmerzapfens 2.6, wenn dieser an der noch zu schildernden Exzenterwelle 5.3 der Klemmeinrichtung mit einer seiner Seitenflächen 2.7 anliegt. Zum Verspannen des Mitnehmerzapfens 2.6 in dem Mitnehmerloch 4 dient die Klemmeinrichtung 5, welche die Wirkung eines Exzenters hat, welcher eine Kraft senkrecht auf eine der Seitenflächen 2.7 des Mitnehmerzapfens ausübt.

Die Klemmeinrichtung 5 hat dazu eine Exzenterwelle 5.3. Sie ist mit geringem Spiel dreh- oder schwenkbar gelagert in der Bohrung 5.2. Diese durchdringt den Körper des Spannfutters von einer Seite des Zylindermantels zur anderen, jedoch außermittig. Dabei ist sie mit ihrer Schwenkachse in der Schnittlinie einer Radialebene und einer Axialebene des Mitnehmerlochs, auf einer Sekante also des Kreisquerschnitts des Mitnehmerlochs derart angelegt und ausgerichtet, dass sie Platz lässt, um den Mitnehmerzapfen in das Mitnehmerloch zwischen dessen kreisförmigen Umfangsbereich und der Exzenterwelle mit geringem Spiel bis zum Anschlag einzustecken.

Die kreiszylindrische Exzenterwelle 5.3 ist im Bereich des Mitnehmerlochs abgeflacht, und zwar über die gesamte Länge der Seitenfläche 2.7 des ihr gegenüber liegenden Mitnehmerzapfens. Die Abflachung 5.4 ist im Querschnitt eine Kreiskappe, die von dem Kreisquerschnitt der Exzenterwelle einen wesentlichen Teil, vorzugsweise etwas weniger als die Hälfte wegschneidet. Der stehen gebliebene Rest der Exzenterwelle hat also im Bereich des Mitnehmerlochs den Querschnitt einer Kreiskappe, deren Höhe gleich oder etwas größer als der Radius des Kreisquerschnittes der Exzenterwelle ist. Dieser Bereich wirkt als Exzenter, durch welchen eine Kraft auf die gegenüber liegende Seitenwand des Mitnehmerzapfens in der Klemmstellung der Exzenterwelle ausgeübt wird.

Die Dimensionen der Abflachung 5.4 und der Lage der Bohrung 5.2 sind so abgestimmt, dass die Exzenterwelle 5.3 in ihrer Neutralstellung nicht die gegenüber liegende Seitenwand 2.7 des Mitnehmerzapfens berührt, beim Verschwenken in die Klemmstellung jedoch mit dem stehen gebliebenen exzentrischen Rest ihres Querschnitts in die Mitnehmernut 2.8 der gegenüber liegenden Seitenwand des Mitnehmerzapfens ragt.

Der Mitnehmerzapfen 2.6 besitzt also zumindest an einer seiner Seitenflächen 2.7 eine Mitnehmernut 2.8, die gegenüber der Ebene der Seitenfläche eine Kreiskappen-förmigen Querschnitt hat, der im wesentlichen dem fehlenden Querschnitt der Abflachung 5.4 der Exzenterwelle 5.3 entspricht. Eine entsprechende Mitnehmernut 2.8 ist bei quadratischer Grundfläche vorzugsweise in jeder der Seitenflächen des Mitnehmerzapfens vorgesehen. Es ist daher egal, in welcher Drehstellung der Mitnehmerzapfen in das Mitnehmerloch gesteckt wird: Es liegt jedenfalls eine Mitnehmernut 2.8 vor der Exzenterwelle, welche in der Umfangswand des Mitnehmerlochs in der zum Mitnehmerloch sekantialen Bohrung 5.2 gelagert wird. Im Unterschied zu den beschriebenen Ausführungsbeispielen liegt die Exzenterwelle in dem Mitnehmerloch frei und teilt in der Grundfläche den Klemmbereich zum Einstecken des Mitnehmerzapfens und auf der anderen Seite einen ungenutzten Bereich ab. Die Gefahr der Schmutzansammlung in diesem ungenutzten Bereich ist wegen der geschilderten Dichtwirkung der Zwischenschicht 7 gering. Der Vorteil dieser Ausführung ist vor allem die einfache Fertigung des kreiszylindrischen Mitnehmerlochs.

Zur Wiederholung: Die axiale Lage der Exzenterwelle ist einerseits durch die Sicherungsschraube 5.5 festgelegt. Am anderen Ende der Exzenterwelle 5.3 ist ein Schwenkhebel befestigt und bei 5.6 in der Neutralstellung, bei 5.7 in der Klemmstellung gezeigt. Der Schwenkhebel liegt in einer Mitnehmerloch 5.1 innerhalb des Hüllzylinders des Spannfutter-Mantels. Wie Fig.2 zeigt, liegt der stehen gebliebene Teil-Querschnitt der Exzenterwelle 5.3 in der Neutralstellung 5.6 des Schwenkhebels außerhalb der Mitnehmernut 2.8 der Seitenflächen 2.7 des Mitnehmerzapfens 2.6.

In der Klemmstellung 5.7 des Schwenkhebels tritt der stehen gebliebene Teil-Querschnitt der Exzenterwelle 5.3 in die Mitnehmernut 2.8 der Seitenflächen 2.7 des Mitnehmerzapfens 2.6. Dadurch entsteht eine formschlüssige Verbindung zwischen Spannfutter und Mitnehmerzapfen. Durch diesen Formschluß wird bei entsprechender enger Dimensionierung der Lage der Bohrung 5.2 des Spannfutters 1, des Durchmessers der Exzenterwelle bzw ihres Hüllzylinders/Exzenters, des Mitnehmerloch und des Mitnehmerzapfens eine Kraft senkrecht auf die betroffene Seitenfläche und damit auch auf die eine oder zwei Axialkanten 2.9 des Mitnehmerzapfens, welche der Exzenterwelle gegenüberliegt, ausgeübt.

Damit wird der Mitnehmerzapfen und das gesamte Werkzeug nicht nur in Achsrichtung sondern auch in radialer und in Umfangs-Richtung fest eingespannt und das Rattern bei der Rotation des Werkzeugs vermieden.

Mit dem Daumen der Hand, die die Werkzeugmaschine mit dem eingespannten Werkzeug hält, kann der Schwenkhebel wieder in die Neutralstellung 5.6 gelegt und mit der anderen Hand der Mitnehmerzapfen 2.6 aus dem Mitnehmerloch 4 gezogen und das Werkzeug aus dem Spannfutter 1 genommen werden.

Werkzeuge wie z.B. Bohrer, Steinbohrer, Lochsägen erzeugen viel Staub, wenn sie auf dem Bau in Stein, Mörtel, Holz, Kunststoff u.ä. angewandt werden. Es sind Maßnahmen getroffenen, dass diese Staub- und Schmutzbelastung nicht den Spannmechanismus des Spannfutters trifft und blockiert.

Der Adapter 2.3 besitzt dazu die zylindrische Zwischenplatte 2.5, die im eingespannten Zustand des Werkzeugs mit einer Stirnfläche auf der Stirnfläche 1.2 des Spannfutters aufliegt und im wesentlichen denselben Durchmesser hat. Wie gesagt: der Mitnehmerzapfen ist nicht so lang, dass er dabei auf den Boden des Mitnehmerlochs 4 stößt.

Die Stirnflächen der Zwischenplatte und des Spannfutters bilden daher im eingespannten Zustand des Werkzeugs eine Dichtpaarung mit einer elastischen Zwischenschicht 7, die auch hier durch einen elastischen, in eine Ringnut 6 eingelegten Dichtring gebildet werden kann.

### Bezugszeichen

Spannfutter 1
   Stirnfläche 1.2
   Rotationsachse1.3
   Mitnehmerloch 1.4
Werkzeug, Lochsäge 2
   Sägekranz 2.1
   Basisplatte 2.2
   Adapter 2.3
   Gewindezapfen 2.4
   Zwischenplatte 2.5
   Mitnehmerzapfen 2.6 als Einspann-Ende der Werkzeugwelle
   Seitenflächen 2.7 des Mitnehmerzapfens 2.6
   Mitnehmerloch 2.8
   Mantellinie 2.9
Abtriebswelle 3
Mitnehmerloch 4 (im Verlauf dieser Anmeldung auch als Aussparung bezeichnet)
   Seitenflächen 4.1 des Mitnehmerlochs,
Klemmeinrichtung 5
   Exzenterwelle 5.1
   Bohrung 5.2
   Exzenter 5.3
   Abflachung 5.4
   Sicherungsschraube 5.5
   Schwenkhebel 5.6 in der Neutralstellung
   Schwenkhebel in der Klemmstellung 5.7
Ringnut 6
Steg 6.1
Elastische Zwischenschicht 7 Dichtring
   Dichtblatt 7.1
   Stützblatt 7.2

## Patentansprüche

1. Spannfutter zum Einspannen eines rotierenden Werkzeugs in eine handgeführte Werkzeugmaschine, wobei das Spannfutter ein zu seiner Rotationsachse koaxiales zylindrisches Mitnehmerloch besitzt, welches das als zylindrischer Mitnehmerzapfen (2.6) ausgebildete Einspannende der Werkzeugwelle mit geringem Spiel aufnimmt, und welches eine radial zur Rotationsachse geführte handbetätigbare Klemmeinrichtung aufweist, mit welcher das Einspannende der Werkzeugwelle in der Mitnehmerloch drehfest festklemmbar ist,
**dadurch gekennzeichnet, dass**
die Klemmeinrichtung eine Exzenterwelle (5.3) ist, welche
• in einer Bohrung des Spannfutters um ihre Längsachse (Schwenkachse) zwischen einer Neutralstellung und einer Klemmstellung schwenkbar gelagert ist,
• das Mitnehmerloch (4) in der Schnittlinie einer Radialebene und einer Axialebene durchdringt und dabei die Rotationsachse (1.3) mit Abstand senkrecht kreuzt
• und innerhalb des Mitnehmerlochs (4) einen zu der Schwenkachse exzentrischen Umfangsbereich (Exzenter 5.3) bildet, welcher in der Neutralstellung von der Rotationsachse abgewandt ist und durch Drehen der Exzenterwelle in ihre Klemmstellung der Rotationsachse zugewandt ist,
dass der zylindrische Mitnehmerzapfen (2.6) in einer Axialebene durch eine Seitenfläche (2.7) derart abgeflacht ist, dass er in der Neutralstellung der Exzenterwelle (5.3) in die Ausnehmung steckbar ist,
• wobei die Seitenfläche (2.7) mit Spiel der Exzenterwelle (5.3) zugewandt und die Grundfläche des zylindrischen Mitnehmerzapfen (2.6) von der Grundfläche der Mitnehmerloch mit geringem Spiel umschrieben ist,
• wobei durch Drehen der Exzenterwelle (5.3) in deren Klemmstellung der Exzenter (5.3) eine Kraft auf die Seitenfläche (2.7) derart ausübt, dass der zylindrische Mitnehmerzapfen (2.6) zwischen der Exzenterwelle und einer oder höchstens zwei Mantellinien des Mitnehmerlochs (Mantellinie 2.9), welche der Exzenterwelle gegenüberliegen, eingeklemmt wird.

2. Spannfutter nach Anspruch 1,
**dadurch gekennzeichnet, dass**
der Mitnehmerzapfen (2.6) ein Kreiszylinder ist, welcher zur Bildung der Seitenfläche (2.7) in einer Axialebene abgeflacht ist.

3. Spannfutter nach Anspruch 1,
**dadurch gekennzeichnet, dass**
der Mitnehmerzapfen (2.6) eine gleichseitig polygonale Grundfläche mit drei, vier oder höchstens fünf Ecken besitzt, welche von der Exzenterwelle und dem Umfang des Mitnehmerlochs (4) umschrieben wird, wobei vorzugsweise jede der Seiten zum Zusammenwirken mit der Exzenterwelle positionierbar ist.

4. Spannfutter nach Anspruch 1,
**dadurch gekennzeichnet, dass**
Mitnehmerloch (4) und Mitnehmerzapfen (2.6) im wesentlichen kongruent mit Spiel ausgebildet sind.

5. Spannfutter nach Anspruch 1,
**dadurch gekennzeichnet, dass**
dass die Seitenfläche (2.7) des in das Mitnehmerloch eingesteckten Mitnehmerzapfens (2.6) gegenüber der Exzenterwelle eine gleich gelegene und gleich ausgerichtete Aussparung (Mitnehmernut 2.8) besitzt, im Querschnitt vorzugsweise in Form einer Kreiskappe, derart, dass die Exzenterwelle in ihrer Neutralstellung außerhalb und in ihrer Klemmstellung mit dem Exzenter innerhalb der Aussparung liegt und die Axialbewegung des Mitnehmerzapfens (2.6) formschlüssig sperrt.

6. Spannfutter nach Anspruch 1,
**dadurch gekennzeichnet, dass**
das Mitnehmerloch des Spannfutters der Seitenfläche (2.7) des zylindrischen Mitnehmerzapfens (2.6) mit einer im wesentlichen kongruente Seitenfläche (4.1) gegenüberliegt,
die Bohrung der Exzenterwelle (5.1) parallel zu dieser Seitenfläche (4.1) verläuft und dabei in dieser mit einem Abschnitt ihres Kreisquerschnitts ein Einschwenkfenster ausschneidet,
derart, dass die Exzenterwelle das Einschwenkfenster in ihrer Neutralstellung nicht, in ihrer Klemmstellung mit ihrem Exzenter (5.3) durchstößt.

7. Spannfutter nach Anspruch 5,
**dadurch gekennzeichnet, dass**
ein Adapter (2.3) mit dem Werkzeug dauerhaft verbunden ist und der Adapter (2.3) mit einer zylindrischen Zwischenplatte (2.5) der Stirnseite (1.2) des Spannfutters gegenüber liegt, wobei Zwischenplatte und Stirnseite des Spannfutters durch eine hoch-elastische, vorzugsweise gummielastische plattenförmige oder ringförmige Zwischenschicht (7) verbindbar sind, vorzugsweise durch einen zentriert festgelegten hoch-elastischen Dichtring , welcher zur Zentrierung vorzugsweise in eine Ringnut (6) eingelegt ist und diese überragt.

8. Spannfutter nach Anspruch 7,
**dadurch gekennzeichnet, dass**
das Werkzeug eine Lochsäge (2) mit kreiszylindrischem Sägeblatt ist, welches an seinem von dem Sägekranz abgewandten Rand mit einer Basisplatte (2.2) festverbunden, z.B. verschweißt ist.
dass die Basisplatte zentrisch ein Loch mit Innengewinde aufweist und durch Verschraubung mit dem zentrischen Gewindezapfen (2.4) des Adapters (2.3) verbunden ist.
